(19) Europäisches Patentamt / European Patent Office / Office européen des brevets

(11) **EP 2 690 004 B1**

## (12) EUROPEAN PATENT SPECIFICATION

(45) Date of publication and mention
of the grant of the patent:
**04.10.2017 Bulletin 2017/40**

(21) Application number: **13189866.0**

(22) Date of filing: **25.08.2011**

(51) Int Cl.:
*B63C 11/24* (2006.01)     *B63C 11/02* (2006.01)
*G05D 11/08* (2006.01)     *G05D 11/13* (2006.01)

(54) **Rebreather control parameter system and dive resource management system**

Steuerparametersystem für ein Atemgerät und Tauchressourcenverwaltungssystem

Système de paramètre de contrôle de rebreather et système de gestion des ressources de plongée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.08.2010 US 862758**

(43) Date of publication of application:
**29.01.2014 Bulletin 2014/05**

(62) Document number(s) of the earlier application(s) in
accordance with Art. 76 EPC:
**11807979.7 / 2 609 006**

(73) Proprietors:
• **Gurr, Kevin**
  **Poole, Dorset BH16 6LE (GB)**
• **Bushell, Nicholas J. K.**
  **Poole, Dorset BH16 6LE (GB)**

(72) Inventors:
• **Gurr, Kevin**
  **Poole, Dorset BH16 6LE (GB)**
• **Bushell, Nicholas J. K.**
  **Poole, Dorset BH16 6LE (GB)**

(74) Representative: **Appleyard Lees IP LLP**
**15 Clare Road**
**Halifax HX1 2HY (GB)**

(56) References cited:
**US-A- 5 503 145      US-A1- 2003 188 745
US-A1- 2006 201 509      US-B1- 6 712 071**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present disclosure relates generally to diving systems and more particularly to systems and apparatuses for controlling and monitoring rebreather systems and managing the use of dive resources.

**BACKGROUND**

Self-contained breathing apparatuses used for underwater diving traditionally are categorized either as open circuit systems or rebreather systems. Open circuit systems are relatively simple and well understood in the art but are inefficient and typically require a large breathing gas supply to provide a reasonable dive time. Each breath inhaled by a diver from an open circuit system is exhaled to the surrounding environment, wasting any oxygen in the breathing gas that is not metabolized by the diver during the respiration cycle.

Rebreather systems recycle each breath exhaled by a diver by removing the carbon dioxide generated by the diver and replacing the oxygen consumed by the diver during the respiration cycle. Essential components of rebreather systems are a breathing loop comprising a diver's lungs, a mouthpiece, a breathing gas supply, a solenoid or flow valve adapted to add breathing gas to the breathing loop, a pressure regulator for the breathing gas supply, a scrubber canister adapted to remove exhaled carbon dioxide, a counterlung, a valve adapted to vent or purge gas from the breathing loop if the total gas pressure in the breathing loop exceeds a preselected pressure value, flexible, gas-impermeable hoses connecting the various components and uni-directional check valves to control the flow of breathing gas through the loop. Rebreather systems may further be categorized as semi-closed circuit systems or closed circuit systems, with each type of rebreather system comprising additional suitable components. Examples of semi-closed circuit and closed circuit rebreather breathing loops are shown in, for example, U.S. Patent Nos. 5,503,145 and 6,302,106.

In a semi-closed circuit system known in the art, the breathing gas supply commonly comprises one high pressure cylinder containing an oxygen-enriched gas mixture, which typically is introduced to the breathing loop at a preselected, constant flowrate to replace oxygen consumed during a dive.

In a closed circuit system known in the art, the breathing gas supply commonly comprises one high pr 5 pressure cylinder containing pure oxygen. A closed circuit system known in the art would additionally typically comprise one or more oxygen sensors adapted to measure the partial pressure of oxygen in the breathing loop during a dive and a computer processor adapted to control the solenoid for the purpose of adding oxygen to the breathing loop as needed to maintain the oxygen partial pressure above a minimum, viable value. A closed circuit system also commonly comprises a high pressure cylinder containing an inert gas or mixture of inert gases, also referred to as diluent gases, that may be added to the breathing loop via a solenoid and pressure regulator to prevent the counterlung from collapsing due to increasing ambient pressure.

A primary consideration in the design and use of semi-closed and closed circuit rebreather systems is the minimization of the risks of hypoxia, in which the diver is deprived of a life-sustaining oxygen supply, and hyperoxia, which occurs when the diver breathes unsafe elevated oxygen levels. Hypoxia can render a diver unconscious and cause drowning. Hyperoxia may lead to oxygen toxicity, which can have severe physiological effects that can lead to the death of the diver. Oxygen toxicity can manifest as either central nervous system (CNS) oxygen toxicity or pulmonary oxygen toxicity.

Hypoxia and hyperoxia are understood as depending on the partial pressure of oxygen in the breathing gas loop. The partial pressure of oxygen is equal to the product of the total pressure of the gas mixture and the concentration, or fraction, of oxygen in the gas mixture, also expressed as PPO2 = Ptotal x FO2. Total gas pressure in the breathing loop increases with ambient pressure, which increases by one atmosphere, or bar, per each ten meters of depth. Accordingly, at a constant oxygen concentration, the partial pressure of gas in the breathing loop increases as depth increases and decreases as depth decreases.

Hypoxia occurs when the partial pressure of oxygen in the breathing loop is less than 0.21 bar (21 kPa), which is the ambient partial pressure of oxygen in the atmosphere at sea level. The minimum life-sustaining value of partial pressure of oxygen is 0.16 bar (16 kPa). Maintaining the partial pressure of oxygen in the breathing loop above 0.21 bar (21 kPa) will minimize decompression time for the diver. However, pulmonary oxygen toxicity can result from prolonged exposure to oxygen partial pressures above approximately 0.5 bar (50 kPa), and CNS oxygen toxicity becomes a significant risk when the partial pressure of oxygen in the breathing loop is greater than 1.6 bar (160 kPa).

In semi-closed circuit systems, the oxygen-enriched gas mixture is usually added to the breathing loop at a constant rate selected to 5 maintain the partial pressure of oxygen in the breathing loop between 0.21 bar (21 kPa) and 1.6 bar (160 kPa) based on the estimated oxygen consumption profile of the diver during a dive. However, the rate of addition typically is not automatically adjusted during a dive in response to the actual partial pressure of oxygen in the breathing loop, even though a diver's rate of oxygen consumption, and therefore the oxygen concentration in the breathing loop, may deviate considerably from the rate of consumption estimated prior to the dive. Inequality between the rate of addition and rate of consumption of oxygen can result in depletion or accumulation of oxygen in the breathing loop. Therefore, transient states may occur and persist in semi-closed systems during which the breathing loop contains either hypoxic (i.e. less than 0.21 bar (21 kPa)) or hyperoxic (i.e. greater than 1.6 bar (160 kPa)) oxygen levels.

Closed circuit rebreather systems provide monitoring and adjustable control of the partial pressure of oxygen in the rebreather breathing loop during a dive. In recognition of the safety and performance concerns outlined above, closed circuit rebreather systems will usually be configured to maintain the partial pressure of oxygen in the breathing loop at a preselected value between 0.21 bar (21 kPa) and 1.6 bar (160 kPa) for the purpose of reducing the risk of hypoxia and hyperoxia. However, the sensors and automated control systems in closed circuit systems are susceptible to malfunctions, which can lead to hypoxic or hyperoxic oxygen levels in the breathing loop. Additionally, the use of pure oxygen in closed circuit systems creates handling and cleanliness issues with regard to the breathing gas supply.

A further disadvantage of semi-closed circuit and closed circuit systems is that excessive venting of gas from the breathing loop may occur. Semi-closed circuit systems are inherently inefficient because the fixed rate of addition of the oxygen-enriched gas mixture to the breathing loop may exceed the diver's rate of oxygen consumption and cause continual venting or purging of gas from the breathing loop to maintain total gas pressure in the breathing loop below a threshold value.

In closed circuit systems, excessive venting may occur during the ascent phase, during which ambient pressure, and correspondingly total gas pressure and partial pressure of oxygen in the breathing loop, decrease. For example, if the preselected control value for oxygen partial pressure in the breathing loop is set close to 1.6 bar (160 kPa) for the purpose of minimizing the diver's decompression time, the closed circuit rebreather control system will increase the addition of oxygen to the breathing loop to compensate for the decrease in partial pressure of oxygen that results from the decrease in ambient pressure. However, the increased volume of gas added to the breathing loop will be vented to maintain total gas pressure in the breathing loop below a threshold value.

The rate of venting of unutilized breathing gas from semi-closed circuit and closed circuit systems may be less than typically experienced with an open circuit system but may nonetheless be sufficient to reduce total dive time or necessitate the use of a larger gas supply to accommodate decompression time during ascent. Additionally, the venting of gas from the breathing loop creates bubbles that may, for example, startle marine life that the diver is attempting to observe, visibly indicate the presence of the diver to observers on the surface or have other undesirable effects.

In view of the limitations of rebreather systems known in the art, a need exists for a rebreather system that provides adjustable control over the partial pressure of oxygen in the breathing loop as well as control over the volume of gas in the breathing loop, and therefore the rate of gas venting from the breathing loop. Such a system would also desirably be free of the disadvantages of using pure oxygen as a breathing gas supply.

Dive monitoring systems known in the art continuously measure, calculate and display parameters such as remaining gas supply, decompression time, partial pressure of oxygen in the breathing loop and depth during a dive to keep a diver informed of the dive profile. These devices are typically configured to display the current status or value of one or more parameters corresponding to dive resources and may also be adapted to assist the diver in pre planning the dive based on end-of-dive requirements. There is a need for a dive monitoring system configured to continuously inform the diver of remaining dive time based on current dive resources and their usage, inform the diver of the dive resources required based on the dive plan specified by the diver and automatically adjust partial pressure of oxygen in the breathing loop as needed to make it possible for a diver to achieve a target dive time.

**SUMMARY**

According to the present invention there is provided an apparatus and method as set forth in the appended claims. Other features of the invention will be apparent from the dependent claims, and the description which follows.

There may be provided a method for adaptively controlling partial pressure of oxygen in the breathing loop of a rebreather such that the setpoint for partial pressure of oxygen may vary as a function of ambient pressure within a range established by safety considerations and such that a diver can adjust the performance of the rebreather between minimizing gas venting from the rebreather breathing loop and minimizing decompression time. The diver may specify values for a control parameter, a minimum value of partial pressure of oxygen, a reduction coefficient and concentration of oxygen in a gas supply, and a maximum operating value of partial pressure of oxygen is calculated as a function of ambient pressure, concentration of oxygen in the gas supply and the first reduction coefficient. A setpoint for partial pressure of oxygen may be calculated as a function of the control parameter, the minimum value of partial pressure of oxygen and the maximum operating value of partial pressure of oxygen. A portion of the gas supply may be added to the breathing loop if the partial pressure of oxygen is less than the setpoint for partial pressure of oxygen, or is less than the minimum value of partial pressure of oxygen. In accordance with some embodiments of the present disclosure, minimum and maximum viable partial pressures of oxygen are chosen as limiting values. The gas supply may consist of either pure oxygen having an oxygen concentration of 100%, in which case the value of the setpoint for partial pressure of oxygen is limited to an absolute maximum value selected to avoid increased risk of central nervous system oxygen toxicity, or an oxygen-enriched gas mixture having an oxygen concentration of less than 100%, in which case a gas supply is selected to having a concentration of oxygen for which partial pressure of oxygen will not exceed a selected value at a maximum planned dive depth. In some embodiments, the control parameter has a value of 0% to 100%, and the reduction coefficient has a value of 0.75 to 0.95

There may also be provided an automatic control system configured to adaptively control partial pressure of oxygen in the breathing loop in accordance with various embodiments of the present disclosure. The automatic control system may comprise a rebreather breathing loop and a processor adapted to receive data for partial pressure of oxygen in the rebreather breathing loop, ambient pressure, a selected minimum value of partial pressure of oxygen, a selected concentration of oxygen in the gas supply, a selected value of a first reduction coefficient and a selected value of a first control parameter; calculate a maximum operating value of partial pressure of oxygen as a function of ambient pressure, the selected concentration of oxygen in the gas supply and the selected value of the first reduction coefficient; calculate a setpoint for partial pressure of oxygen as a function of the selected value of the first control parameter, the selected value of a first control parameter and the selected minimum value of partial pressure of oxygen; compare data for partial pressure of oxygen in the rebreather breathing loop with the setpoint for partial pressure of oxygen; and send a signal to add a portion of the gas supply to the rebreather breathing loop if the partial pressure of oxygen in the rebreather breathing loop is less than the setpoint for partial pressure of oxygen.

There may also be provided a method for managing the use of dive resources. A target dive time may be selected, and a target remaining dive time is calculated from a measurement of elapsed dive time. Dive resource net effects of gas supply duration, scrubber canister duration and battery duration and remaining dive times corresponding to each dive resource net effect may be calculated from dive resources corresponding to pressure of a gas supply, scrubber capacity and battery capacity and dive resource usage rates corresponding to decrease in pressure of the gas supply over time, number of injections from the gas supply into the rebreather breathing loop over time and electrical current. Required dive times may be calculated from dive variables corresponding to depth, elapsed dive time, partial pressure of oxygen in the rebreather breathing loop, concentration of carbon dioxide in the rebreather breathing loop and temperature of the scrubber canister and dive time limitations corresponding to no decompression limit, decompression time and central nervous system oxygen toxicity percentage. A termination time may be identified corresponding to the lowest value of the target remaining dive time and each of the remaining dive times. In accordance with some embodiments of the present disclosure, a warning indicator is displayed if the required dive time is equal to or greater than the termination time, and otherwise the termination time is displayed. In some embodiments, if the required dive time is equal to or greater than the termination time, the setpoint for partial pressure of oxygen is reduced within safety limits to increase termination time and enable completion of the dive as planned.

There may also be provided a dive resource management system configured to monitor and manage dive resources, dive resource usage rates, dive resource net effects, dive variables and dive time limitations. In certain embodiments, the dive resource management system displays information and warnings corresponding to the status of dive resources and dive time limitations relative to a target dive time. In certain embodiments, the dive resource management system automatically adjusts the setpoint for partial pressure of oxygen to conserve dive resources if one or more required dive time limitations exceed target remaining dive time.

In accordance with some aspects of some embodiments, apparatus and methods that may be implemented in accordance with adaptively controlling partial pressure of oxygen in the breathing loop and/or with method for managing the use of dive resources as disclosed herein, provide for compensating for the hydrostatic effect associated with the difference between the pressure exerted on the diver's lung centroid and the pressure exerted on the counterlung.

In some embodiments, an apparatus comprises a loop control valve that includes (i) a loop port configured for coupling to receive a gas feed via a one-way valve from an exhale counteriung of a rebreather loop, and (ii) a vent port configured to selectively vent a volume of gas from the rebreather loop. The apparatus also comprises a subsystem configured to vary a loop pressure at which the loop control valve is operable to selectively vent the volume of gas from the rebreather loop.

In some embodiments, the loop control valve may comprise a valve stop that selectively gates the flow of the gas from the rebreather loop to the vent port, and wherein the subsystem comprises at least one mechanical component configured to vary a force applied to the valve stop according to the orientation of the loop control valve.

In some embodiments, the subsystem comprises a processor that is configured to detect an accelerometer signal and to selectively gate the loop control valve to vent the volume of gas from the rebreather loop based on at least the accelerometer signal.

Other systems, methods, features, and advantages of some embodiments of this disclosure will be, or will become, apparent to one with skill in the art upon examination of the following figures and detailed description.

## BRIEF DESCRIPTION OF DRAWINGS

These and other features, aspects and advantages of the method and system of the present disclosure will become better understood with regard to the following description, appended claims and accompanying drawings where:

FIG. 1 shows a flowchart of a method embodying features of some embodiments of the present disclosure for controlling partial pressure of oxygen in the breathing loop of a rebreather system;

FIG. 2 shows an exemplary graphical representation of dive depth plotted as a function of time for a test dive implemented in accordance with some embodiments;

FIG. 3 shows an exemplary graphical representation of setpoint for partial pressure of oxygen plotted as a function of time for the test dive corresponding to FIG. 2 implemented in accordance with some embodiments;

FIG. 4 shows an exemplary graphical representation of measured partial pressure of oxygen plotted as a function of time for the test dive corresponding to FIG. 2 implemented in accordance with some embodiments;;

FIG. 5 shows an exemplary graphical representation of control error difference between setpoint for partial pressure of oxygen and measured partial pressure of oxygen plotted as a function of time for the test dive corresponding to FIG. 2 implemented in accordance with some embodiments;

FIG. 6 shows an exemplary graphical representation of the operating range of partial pressure of oxygen as a function of ambient pressure, control parameter value and setpoint for partial pressure of oxygen, in accordance with some embodiments;

FIG. 7 shows a flowchart of a method embodying features of some embodiments of the present disclosure for managing dive resources, dive resource usage rates, dive resource net effects, dive variables and dive time limitations;

FIG. 8 shows an exemplary graphical representation of a warning indication corresponding to the viability of a dive that is displayed to a diver, in accordance with some embodiments;

FIG. 9 shows an exemplary graphical representation of a warning indication corresponding to the viability of a dive that is displayed to a diver, in accordance with some embodiments;

FIG. 10 shows an exemplary graphical representation of a warning indication corresponding to the viability of a dive that is displayed to a diver, in accordance with some embodiments;

FIG. 11 shows an exemplary graphical representation of dive resource net effects and dive time limitations that are displayed to a diver, in accordance with some embodiments;

FIG. 12 shows an exemplary graphical representation of dive resource net effects that are displayed to a diver;

FIG. 13 shows an exemplary graphical representation of dive resource net effects that are displayed to a diver; and

FIGS. 14A-C schematically depict an illustrative loop control valve (LCV) that provides for venting loop overpressure while compensating for the hydrostatic effect, in accordance with some embodiments.

## DETAILED DESCRIPTION OF EMBODIMENTS

A rebreather system of the present disclosure include a breathing loop comprising a scrubber canister, a counterlung, a sensor for measuring ambient pressure, a pressure transducer for determining depth, a sensor for measuring partial pressure of oxygen in the rebreather breathing loop, a valve for adding a gas supply to the rebreather breathing loop, a power source, connecting hoses, check valves, a processor adapted to receive data, execute calculations, send signals to display data and warning indicators and control the actuation of the addition valve, a gas supply pressure regulator and a gas supply consisting of either a single high-pressure source containing an oxygen-enriched gas mixture or a source containing pure oxygen in conjunction with a source containing diluent gas. In certain embodiments, the rebreather system comprises a passive mechanical addition valve that is adapted to add the gas supply to the rebreather breathing loop at a fixed rate if ambient pressure exceeds the total gas pressure in the breathing loop by a preselected value. In certain embodiments of the present disclosure, the rebreather system comprises a passive mechanical overpressure valve that is adapted to vent gas from the rebreather breathing loop at a fixed rate if the total gas pressure in the breathing loop exceeds ambient pressure by a preselected value. In some embodiments, the preselected value is 25 mbar (2.5 kPa).

The processor is implemented, in accordance with some embodiments of the present disclosure, as a microprocessor, microcontroller, digital signal processing circuit or firmware programmed to receive measurement data and perform calculations. A processor in accordance with certain embodiments of this disclosure is capable of being programmed by a user with various user defined parameters and incorporates a display and buttons, keys, switches or similar articles suitable for inputting information to the processor. The processor includes sensor ports for receiving signals from pressure transducers, oxygen sensors and carbon dioxide sensors, for example. The processor also includes output ports for transmitting signals to components of the rebreather system, including solenoid valves. Suitable processors can be implemented from conventional, commercially-available components having an input and an output bus and including an arithmetic computational ability. Various suitable processors are manufactured by, for example, Renesas and Microchip.

The maximum theoretical partial pressure of oxygen, or PPO2, available to the diver in the breathing loop at any depth is calculated as the product of the concentration of oxygen, or FO2, in the oxygen-enriched gas mixture supply and the ambient pressure, or Pambient. Because Pambient varies with depth, the partial pressure of oxygen for the gas supply also varies with depth and reaches a maximum value at the maximum depth of a dive. To maintain the maximum partial pressure of oxygen, or PPO2(max), at safe levels during the course of a dive, in certain embodiments, the diver may select a gas supply for which the maximum partial pressure of oxygen will not exceed a selected threshold. For example, if the gas supply is an oxygen-enriched gas mixture, the desired maximum partial pressure of oxygen for the duration of the dive is 1.6 bar (160 kPa) and the planned maximum dive depth is 40 meters, at which Pambient is 5 bar (500 kPa), then the appropriate concentration of oxygen in the oxygen-enriched gas supply will be equal to or less than PPO2(max)/Pambient = 1.6 bar (160 kPa)/5 bar (500 kPa) = 32%. Conversely, a known viable minimum partial pressure of oxygen is 0.21 bar (21 kPa), which corresponds to a concentration of oxygen of 21% at 1 bar (100 kPa). The maximum potential dive depth using an oxygen-enriched gas supply and maintaining at least a known viable minimum partial pressure of oxygen is then determined according to PPO2(max)/FO2 = 1.6/21% = 7.6 bar (760 kPa), which corresponds to approximately 66 meters.

Selecting the concentration of oxygen in this manner would allow the oxygen-enriched gas supply to be used safely in an open-circuit bailout configuration of the rebreather system, in which a diver would inhale the oxygen-enriched gas supply without the use of automatic control to maintain the partial pressure of oxygen in the breathing loop below a safe level. In the event that the solenoid valve failed during a dive and remained open to continue providing breathing gas to the diver, selecting the concentration of oxygen according to the maximum planned dive depth would also help insure that the constant addition of the oxygen-enriched gas supply to the breathing loop through the open solenoid valve would not produce excessive partial pressure of oxygen in the breathing loop.

The method of some embodiments of the present disclosure allows the diver to balance gas usage against decompression requirements by maintaining an adjustable setpoint for partial pressure of oxygen that varies with ambient pressure as dive depth varies. In some embodiments, the diver selects a value for a control parameter expressed as a fraction or percentage of the range between the minimum and maximum safe partial pressures of oxygen. In some embodiments, the value of the control parameter varies between 0% and 100%.

A diver may select the maximum value of the control parameter for the purpose of minimizing decompression time during the dive-ending ascent. Choosing the maximum value of the control parameter would induce the control system to add the gas supply to the rebreather loop in order to maintain a higher target partial pressure of oxygen (closer to the maximum theoretical partial pressure of oxygen value). The increased volume of gas addition may cause increased venting of gas from the rebreather loop and higher usage rates of the gas supply. A resulting penalty of choosing the maximum control parameter value may therefore be less efficient use of the gas supply.

This effect is amplified as depth, and ambient pressure, increase. The maximum theoretical partial pressure of oxygen is directly proportional to ambient pressure, and the target partial pressure of oxygen increases with the maximum theoretical partial pressure of oxygen at a constant control parameter value. Accordingly, as depth increases, the rebreather control loop increases the addition of the gas supply to the rebreather loop to maintain the target partial pressure of oxygen, which may produce excessive total gas pressure in the rebreather breathing loop. Excess gas is vented, or purged, automatically from the rebreather breathing loop to maintain total gas pressure in the rebreather loop below a preselected threshold.

Conversely, a diver may select the minimum value of the control parameter for the purpose of minimizing the venting of gas from the rebreather loop and minimizing the consumption of the gas supply. However, by specifying the minimum control parameter value, the diver biases the operation of the rebreather system to maintain a lower target partial pressure of oxygen, which increases the required decompression time.

At various times during a dive, the diver may wish to either minimize gas venting from the rebreather breathing loop or minimize decompression time. Some embodiments of the method and control system of the present disclosure enable the diver to increase or decrease the control parameter and the partial pressure of oxygen while a dive is in progress, while staying within safety limits, in order to accommodate changing objectives.

Effects associated with different values of the control parameter are summarized in Table 1, using an exemplary range for partial pressure of oxygen from 0.21 bar (21 kPa) to 1.6 bar (160 kPa):

TABLE 1

| Control Parameter Value | PPO2 (kPa) | Effects |
|---|---|---|
| 0% to 33% | 21 to 67 | Low PPO2<br>Low gas venting<br>Low gas supply usage<br>High decompression requirement<br>Short no-decompression time |
| 34% to 66% | 67 to 93 | Mid-range PPO2<br>Medium gas venting<br>Medium gas supply usage<br>Average decompression requirement<br>Average no-decompression time |
| 66% to 100% | 93 to 160 | High PPO2<br>High gas venting<br>High gas supply usage<br>Low decompression requirement<br>Long no-decompression time |

Since a diver consumes oxygen, at constant depth, the partial pressure of oxygen in the rebreather breathing loop while in use will always be less than the partial pressure of oxygen in the gas supply. Selecting a maximum partial pressure of oxygen that is equal to the maximum theoretical partial pressure of oxygen at depth could therefore lead to increased addition of the gas supply to the rebreather breathing loop and excessive gas usage if target partial pressure of oxygen is close to maximum theoretical partial pressure. In some embodiments, a reduction coefficient is applied to the maximum partial pressure in order to avoid excessive gas usage. In some embodiments, the value of the reduction coefficient is between 0.75 and 0.95.

Similarly, controlling at low partial pressures of oxygen close to the known viable value of 0.21 bar (21 kPa) increases the risk of hypoxia, since the actual partial pressure of oxygen in the rebreather loop can dip below 0.21 bar (21 kPa) in response to changes in depth and accompanying changes in target partial pressure of oxygen. Accordingly, it is advantageous to select a minimum partial pressure of oxygen greater than 0.21 bar (21 kPa) to ensure viable partial pressure of oxygen during the course of the dive.

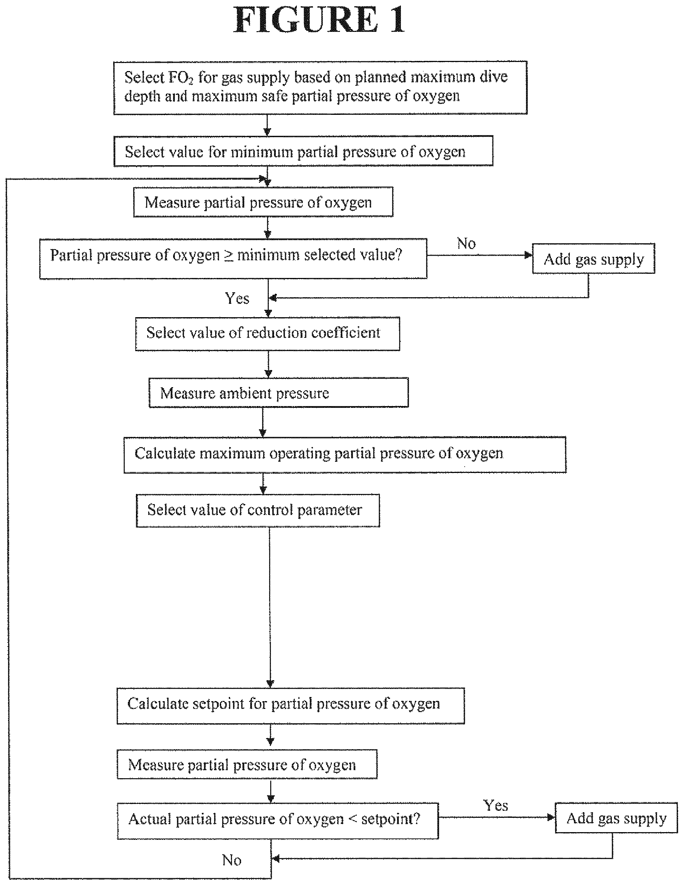

FIG. 1 illustrates a method of automatically controlling partial pressure of oxygen in accordance with the present disclosure for a rebreather configuration using an oxygen-enriched gas supply. A setpoint for the partial pressure of oxygen may be calculated according to the following equations:

$$S = P \times (R \times PPO2(max) - PPO2(min)) + PPO2(min)$$

$$PPO2(max) = FO2 \times Pambient$$

where S is the setpoint for the partial pressure of oxygen, P is the control parameter, R is the reduction coefficient, PPO2(max) is the maximum value of partial pressure of oxygen at a specified depth, PPO2(min) is the selected minimum partial pressure of oxygen, FO2 is the concentration of oxygen in the gas supply and Pambient is ambient pressure.

The oxygen partial pressure setpoint in a prophetic example with FO2 = 40%, Pambient = 3 bar (300 kPa) at 20 meters depth, PPO2(min) = 0.3 bar (30 kPa), R = 0.9 and P = 50% will be

$$PPO2(max) = 3 \text{ bar} \times 40\% = 1.2 \text{ bar (120 kPa)}$$

$$S = 0.5 \times (0.9 \times 1.2 \text{ bar} - 0.3 \text{ bar}) + 0.3 \text{ bar} = 0.69 \text{ bar (69 kPa)}$$

In a rebreather configuration using a diluent gas and a gas supply containing pure oxygen, the concentration of oxygen in the gas supply would be 100%. Accordingly, it would be possible for the maximum theoretical partial pressure of oxygen to exceed a viable safe limit of, for example, 1.6 bar (160 kPa). Therefore, the method illustrated in FIG. 1 would incorporate an additional step by which, if S calculated in accordance with the equations listed above exceeded a viable safe limit for partial pressure of oxygen during a dive, then the value of S would be set at the viable safe limit.

In accordance with this method, the setpoint is adjusted to a partial pressure of oxygen that can be maintained within the limits established by safety considerations and depth, and the control parameter may be varied to suit the dive plan and yield a setpoint that balances decompression time and gas usage. If the partial pressure of oxygen in the rebreather breathing loop is below the setpoint, a portion of the gas supply is added to the rebreather breathing loop to increase the partial pressure of oxygen to the setpoint. In some embodiments, the gas supply will be added to the rebreather breathing loop in pulses of 1 liter per second. If the partial pressure of oxygen in the rebreather loop is above the setpoint, no action will be taken by the control system and excess oxygen will be metabolized by the diver until the partial pressure of oxygen decreases to the setpoint.

One of ordinary skill in the art will understand that a control system according to some embodiments of the present disclosure will maintain partial pressure of oxygen in the rebreather loop within a small range relative to the setpoint. In certain embodiments, partial pressure of oxygen in the rebreather loop will be controlled to the value of the setpoint $\pm$ 0.05 bar (5 kPa).

In accordance with the method shown in FIG. 1, measured data is updated by the processor of some embodiments of the present disclosure at a rate specified by the control loop. The method in accordance with embodiments of the present disclosure may be executed repeatedly at a rate sufficient to ensure that the partial pressure of oxygen in the breathing loop will remain in a viable range to ensure diver safety. In some 5 embodiments, data measurements and calculations will be performed once per second, which is reflective of well-known response times for changes in partial pressure of oxygen in the rebreather loop. One with skill in the art will understand that the parameters of measuring rate and control loop execution rate can be adjusted within limits suitable to maintain partial pressure of oxygen in the breathing loop within safe limits.

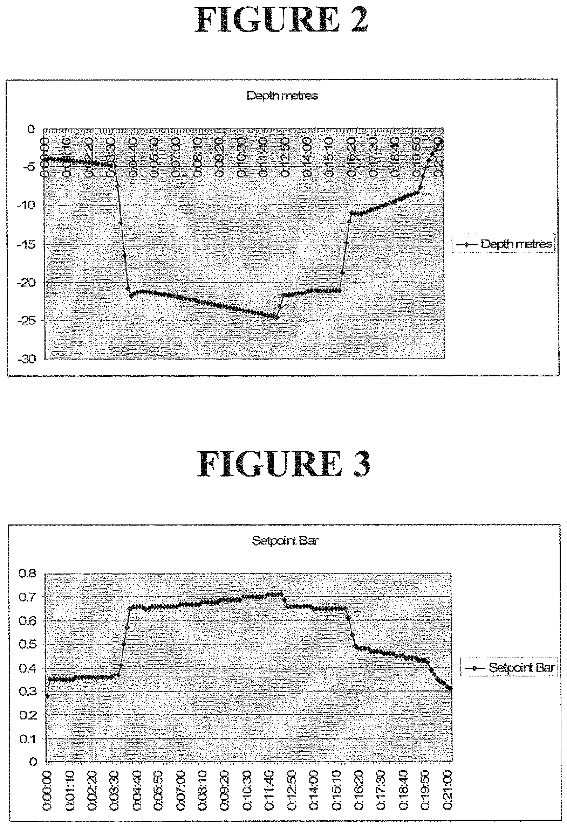

The dependence of oxygen partial pressure setpoint and measured partial pressure of oxygen on dive depth and the control error difference between setpoint and measured partial pressure is shown in FIGS. 2, 3, 4 and 5. These graphical representations display data collected during a test dive conducted using a mechanical breathing apparatus made by Ansti Test Systems Ltd., with the following test conditions: FO2 = 40%, PPO2(min) = 0.3 bar (30 kPa), R = 0.9 and P = 50%.

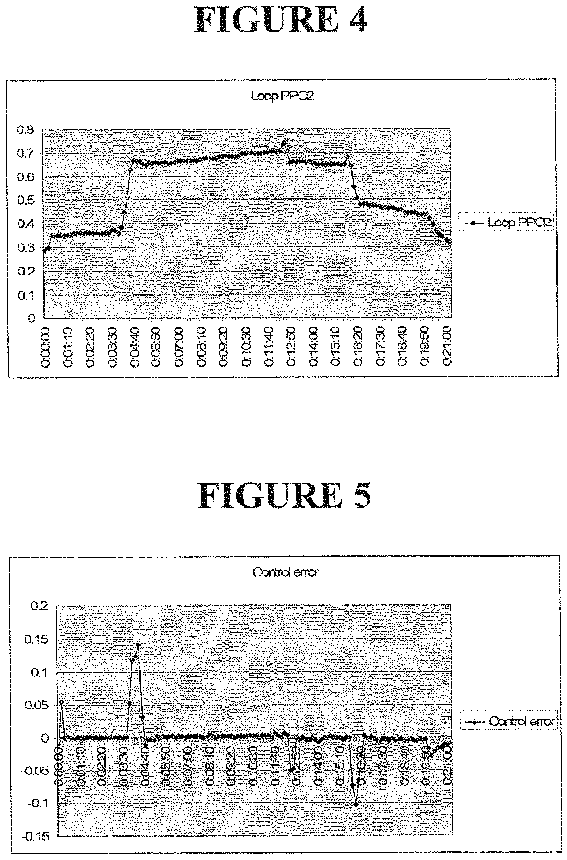

In this working example, the setpoint S was continuously automatically adjusted corresponding to the changes in depth, as shown in FIGS. 2 and 3, and the partial pressure of oxygen in the rebreather loop as shown in FIG. 4 was controlled to the value calculated for S. FIG. 5 depicts the lag exhibited in the control system when depth and ambient pressure changed significantly in a short time period. Increasing depth caused the oxygen partial pressure setpoint to increase, and the oxygen partial pressure measured in the rebreather loop temporarily rose above the setpoint as addition of the gas supply continued after depth ceased to change. Decreasing depth correspondingly caused the oxygen partial pressure measured in the rebreather loop to temporarily drop below the setpoint.

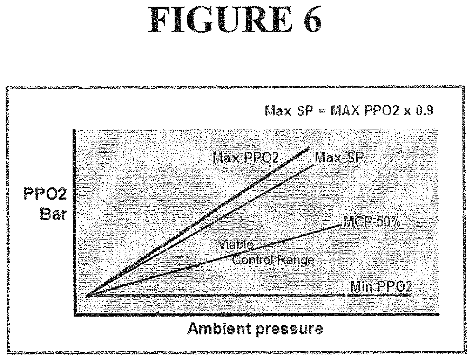

As shown in FIG. 6, use of embodiments of the present disclosure enables the diver to optimize gas usage by adjusting the control system within limits that are safe but are wider than would be available with a rebreather system that controls to a constant concentration of oxygen or partial pressure of oxygen in the rebreather loop. The wider range is determined by the ambient pressure, as well as the metabolic rate of the diver and the concentration of oxygen in the gas supply. In particular, a control system in accordance with some embodiments of the present disclosure will be more efficient compared to a rebreather system that controls to a constant concentration of oxygen because an acceptable partial pressure of oxygen can be maintained in the rebreather loop at shallower depths, where the ambient pressure is lower, using a lower rate of addition of gas supply.

A control system in accordance with some embodiments of the present disclosure will perform most efficiently if the partial pressure of oxygen is allowed to vary in conjunction with ambient pressure and diver metabolic rate. The overall allowable range of partial pressure of oxygen would need to ensure that partial pressure of oxygen does not fall below safe levels required for metabolism, and does not rise above levels associated with central nervous system toxicity. Within this wide operating range, the diver narrows the range to improve predictable operation of the rebreather system by choosing a value of the control parameter P that sets the bias of operation from conservative use of supply gas and low venting to high gas supply usage with higher partial pressure of oxygen and reduced potential for decompression requirements.

Another aspect of some embodiments of the present disclosure is the management of dive resources, dive resource usage rates, dive resource net effects, dive variables, dive time limitations and pre-selected dive plans. The viability of a pre-selected dive plan is determined by the types of factors shown in Table 2.

TABLE 2

| Type | Description |
| --- | --- |
| Dive resource | A capacity of the diving apparatus that can be measured or is known, and may be replenished |
| Dive resource usage rate | Change in dive resource over time |
| Dive resource net effect | Expected duration of a remaining dive resource based on usage rage |
| Dive variable | An environmental factor affecting decompression time, no decompression limit or central nervous system oxygen toxicity percentage |
| Dive time limitation | A dive requirement determined by decompression time, no decompression limit or central nervous system oxygen toxicity percentage |
| Dive plan | May comprise a target dive time and/or preselected dive-end values for one or more dive resources |

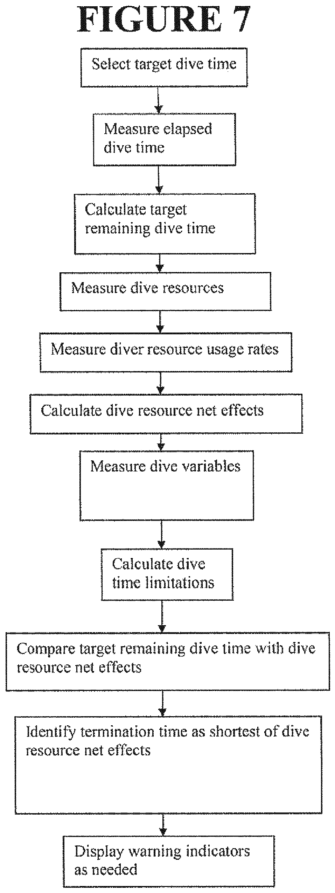

As shown in FIG. 7, dive resources, dive resource usage rates, dive resource net effects, dive variables and dive time limitations may be evaluated continuously to advise the diver regarding the status of the dive and to warn the diver if a pre-selected dive plan becomes nonviable. A processor configured in accordance with certain embodiments can calculate or receive data corresponding to, for example, pressure of a gas supply, scrubber capacity, battery capacity, decrease in pressure of the gas supply over time, number of injections from the gas supply into the rebreather breathing loop over time, electrical current, gas supply duration, scrubber canister duration, battery duration, depth, elapsed dive time, partial pressure of oxygen in the rebreather breathing loop, no decompression limit, decompression time, central nervous system oxygen toxicity percentage, concentration of carbon dioxide in the rebreather breathing loop and temperature of the scrubber canister. As known in the art, scrubber capacity represents the ability of the scrubber medium to absorb $CO_2$ (e.g., volume of $CO_2$ that the scrubber can absorb), and a typical and well known medium for removing $CO_2$ is Sofnolime.

One of skill in the art will understand that dive resources, dive resource usage rates, dive resource net effects, dive variables and dive time limitations may be calculated and/or measured through suitable means known in the art. For example, no decompression limit and decompression time can be determined through using dive tables compiled by the United States Navy or tables derived from the Bühlmann decompression algorithm or other suitable decompression algorithms.

In a method in accordance with certain embodiments, a dive plan and resource changes are input by a user, and the duration remaining for each dive resource is determined from the dive resource measurement data and the calculated or measured usage rates. The dive resource having the shortest duration is identified as the controlling resource at that stage in the dive, and the duration to the completion of the dive plan or a segment of the dive plan is measured against the dive resource time remaining. If the duration of the identified dive resource is shorter than the duration to the completion of the dive plan or segment, then the duration of the identified dive resource and the dive resource type are displayed.

The viability of the dive plan or segment is determined based in part upon decompression requirements, no-decompression limit and dive segment target time. The dive plan or segment is

1. Viable, with no use of reserve resources;

2. Viable, with partial use of reserve resources; or

3. Not viable, exceeding available dive resources and reserve resources.

In certain embodiments, the processor and rebreather system display a bar graph of the dive resource having the shortest duration and a graphical indication of the dive viability. In certain embodiments, the processor and rebreather system display warning indicators corresponding to each category of viability. In certain embodiments, the warning indicators are color coded, such as green for category 1, yellow for category 2 and red for category 3.

In certain embodiments of the present disclosure, the processor and rebreather system display a time countdown to dive resource completion for the dive resource having the shortest duration. In certain embodiments, the processor and rebreather system display an overrun time to indicate the magnitude by which the dive resource usage exceeds the duration of the dive resource so that the diver can take appropriate action.

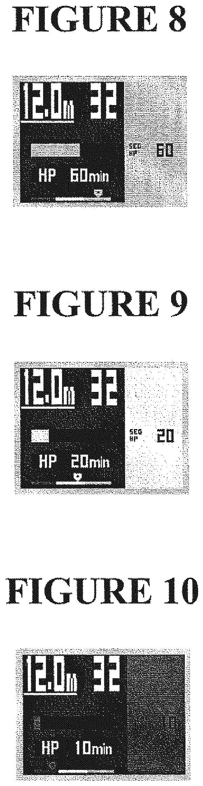

FIGS. 8, 9 and 10 provide exemplary graphical representations of the warning indications and duration data that may be displayed by a processor and rebreather system in accordance with certain embodiments of the present disclosure. In the scenario depicted in FIG. 8, the gas supply is sufficient to complete the dive. Gas supply duration is less than other dive resources and the no-decompression limit. In this embodiment, the rebreather system displays green colorcoding and the diver may continue the dive.

In the scenario depicted in FIG. 9, the gas supply is not sufficient to complete the planned dive without consuming reserve supply gas. In this embodiment, the rebreather system displays yellow color-coding to warn the diver that the planned dive is not viable without using reserve dive resources.

In the scenario depicted in FIG. 10, the planned dive requires dive resources that exceed the sum of the primary gas supply and the reserve gas supply. In this embodiment, the rebreather system displays red color-coding to warn the diver that the planned dive is not viable and the diver should ascend.

Table 3 shows a prophetic example of dive resources, dive resource usage rates, dive resource net effects, dive variables and dive time limitations in which no decompression limit is less than the available dive resource net effects. Accordingly, the remaining available dive time is equal to the no decompression limit. All duration calculations are measured in minutes to the end of the dive resources and the beginning of reserve resources.

TABLE 3

| Dive Resource or Dive Time Limitation | Quantity or Duration Remaining | Rate of Consumption | Dive Resource Net Effect or Dive Time Limitation |
|---|---|---|---|
| Gas supply | 7.8 MPa | 100 kPa per min | 78 min |
| Scrubber duration | 436 gas injections | 5 injections per min | 86 min |
| No decompression limit | | | 67 min |
| Battery capacity | | | 340 min |
| Dive time remaining | | | 67 min |

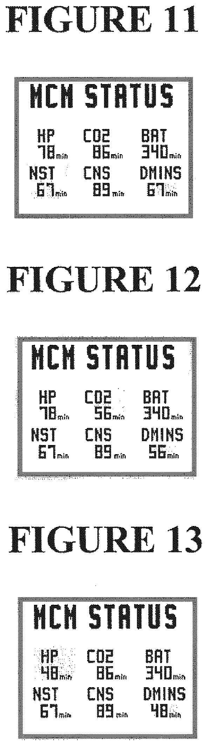

FIG. 11 shows a prophetic example of a graphical representation of information in Table 3 as displayed to the diver.

Table 4 shows a prophetic example of dive resources, dive resource usage rates, dive resource net effects, dive variables and dive time limitations in which scrubber duration is the dive resource net effect or dive time limitation of shortest duration. Accordingly, the remaining available dive time is equal to the scrubber duration. All duration calculations are measured in minutes to the end of the dive resources and the beginning of reserve resources.

TABLE 4

| Dive Resource or Dive Time Limitation | Quantity or Duration Remaining | Rate of Consumption | Dive Resource Net Effect or Dive Time Limitation |
|---|---|---|---|
| Gas supply | 7.8 MPa | 100 kPa per min | 78 min |
| Scrubber duration | 280 gas injections | 5 injections per min | 56 min |
| No decompression limit | | | 67 min |
| Battery capacity | | | 340 min |
| Dive time remaining | | | 56 min |

FIG. 12 shows a prophetic example of a graphical representation of information in Table 4 as displayed to the diver.

Scrubber duration is not affected by the selected value of the control parameter P and 15 instead is inversely proportional to diver metabolic rate. Increasing depth generally induces higher diver metabolic rate. Although diver metabolic rate is not a variable controlled by the rebreather system, carbon dioxide concentration and rate of addition can be measured to inform the diver of the quality of the breathing gas and warn the diver of decreasing scrubber duration.

Table 5 shows a prophetic example of dive resources, dive resource usage rates, dive resource net effects, dive variables and dive time limitations in which gas supply is the resource of shortest duration. Accordingly, the remaining available dive time is equal to the gas supply duration. All duration calculations are measured in minutes to the end of the dive resources and the beginning of reserve resources.

TABLE 5

| Dive Resource or Dive Time Limitation | Quantity or Duration Remaining | Rate of Consumption | Dive Resource Net Effect or Dive Time Limitation |
|---|---|---|---|
| Gas supply | 4.8 MPa | 100 kPa per min | 48 min |
| Scrubber duration | 436 gas injections | 5 injections per min | 86 min |
| No decompression limit | 67min | | 67 min |
| Battery capacity | | | 340 min |
| Dive time remaining | | | 48 min |

FIG. 13 shows a prophetic example of a graphical representation of information in Table 5 as displayed to the diver.

Table 6 shows a prophetic example of dive resources, dive resource usage rates, dive resource net effects, dive variables and dive time limitations in which additional dive time is viable in excess of the required decompression time. All duration calculations are measured in minutes to the end of the dive resources and the beginning of reserve resources.

TABLE 6

| Dive Resource or Dive Time Limitation | Quantity or Duration Remaining | Rate of Consumption | Dive Resource Net Effect or Dive Time Limitation |
|---|---|---|---|
| Gas supply | 20 MPa | 100 kPa per min | 200 mins |
| Scrubber duration | 500 gas injections | 5 injections per min | 100 mins |
| Decompression limit | | 19 | 67 min |
| Battery capacity | 3000 mA-hr | 30 mA | 6000 min |
| Additional dive time available at depth | | | 40 min |

Table 7 shows a prophetic example of dive resources, dive resource usage rates, dive resource net effects, dive variables and dive time limitations in which the shortest duration dive resource, specifically, scrubber canister duration, is equal to required decompression time. In this exemplary scenario, continuing the dive would not be viable and the diver would need to begin the ascent, including decompression stops, immediately. All duration calculations are measured in minutes to the end of the dive resources and the beginning of reserve resources.

TABLE 7

| Dive Resource or Dive Time Limitation | Quantity or Duration Remaining | Rate of Consumption | Dive Resource Net Effect or Dive Time Limitation |
|---|---|---|---|
| Gas supply | 20 MPa | 100 kPa per min | 200 mins |
| Scrubber duration | 500 gas injections | 5 injections per min | 100 mins |
| Decompression time | 100 min | | 100 mins |
| Battery capacity | 3000 mA-hr | 30 mA | 6000 min |
| Additional dive time available at depth | | | 0 min |

Table 8 shows a prophetic example of dive resources, dive resource usage rates, dive resource net effects, dive variables and dive time limitations in which scrubber duration based on volume of gas supply usage is the resource of shortest duration. Scrubber duration exceeds target dive time, and additional dive time at depth is available. All duration calculations are measured in minutes to the end of the dive resources and the beginning of reserve resources.

TABLE 8

| Dive Resource or Dive Time Limitation | Quantity or Duration Remaining | Rate of Consumption | Dive Resource Net Effect or Dive Time Limitation |
|---|---|---|---|
| Gas supply | 20 MPa | 100 kPar per min | 200 mins |
| Gas supply (metabolic rate) | 20 MPa | 1.6 liter $O_2$ per min | 130 min |
| Scrubber duration | 500 injections | 5 injections per min | 100 min |
| Scrubber duration (thermal profile) | | | 120 min |
| Scrubber duration (carbon monoxide concentration) | <0.4 mB | | |
| Diver metabolic rate | 1.2 liter $O_2$ per min | | |
| Battery capacity | 3000 mA-hr | 30 mA | 6000 min |
| No decompression limit | 90 min | | |
| Decompression time | none | | |
| CNS toxicity percentage | 10% | 0.5% per min | 140 min |
| Target dive time | | | 80 min |
| Additional dive time available at depth | | | 20 min |

Table 9 shows a prophetic example of dive resources, dive resource usage rates, dive resource net effects, dive variables and dive time limitations in which scrubber duration based on volume of gas supply usage is the resource of shortest duration. Target dive time exceeds scrubber duration. Accordingly, continuing the dive would not be viable and the diver would need to begin the ascent, including decompression stops, immediately. All duration calculations are measured in minutes to the end of the dive resources and the beginning of reserve resources.

TABLE 9

| Dive Resource or Dive Time Limitation | Quantity or Duration Remaining | Rate of Consumption | Dive Resource Net Effect or Dive Time Limitation |
|---|---|---|---|
| Gas supply | 20 MPa | 100 kPa per min | 200 mins |
| Gas supply (metabolic rate) | 20 MPa | 1.6 liter $O_2$ per min | 130 m in |
| Scrubber duration | 500 injections | 5 injections per min | 100 min |
| Scrubber duration (thermal profile) | | | 120 m in |
| Scrubber duration (carbon monoxide concentration) | <0.4 mB | | |
| Diver metabolic rate | 1.2 liter $O_2$ per min | | |
| Battery capacity | 3000 mA-hr | 30 mA | 6000 min |
| No decompression limit | 90 min | | |
| Decompression time | none | | |
| CNS toxicity percentage | 10% | 0.5% per min | 140 min |
| Target dive time | | | 120 min |
| Additional dive time available at depth | | | -20 min |

Some illustrative implementations of a method of the present disclosure for managing dive resources have been illustrated in the foregoing prophetic examples with regard to a rebreather system in accordance with some embodiments of the present disclosure. However, various embodiments of the method of the present disclosure for managing dive resources could alternatively be applied to any rebreather or diving system where resources are limited and must be used in combination with the diver's decompression or physiological requirements. Additionally, it will be understood that the displays shown in the drawings (FIGS. 8-13) are merely illustrative; the present disclosure is not limited to embodiments employing the format, content, graphics, etc., as depicted in these illustrative embodiments. For example, various alternative embodiments may be implemented using a different human-computer interface (HCI), and may present additional or different (e.g., not necessarily all information shown in FIGS. 8-13, etc.) information than presented in the illustrative displays of FIGS. 8-13.

In view of the foregoing, those skilled in the art will understand that some embodiments of the present disclosure provide for variable electronic control of PO2, wherein the PO2 may be varied according to, for example, one or more of the following parameters: (a) depth; (b) no stop time remaining or decompression obligation building (e.g., PO2 can be increased or reduced); (c) resource limitation (e.g., HP, CO2, canister duration, oxygen toxicity, water temperature, battery life, remaining bailout gas). Additionally, in accordance with some embodiments, a dive monitoring system not only monitors and displays all the parameters of the dive (e.g.,. depth, time, decompression, oxygen toxicity, gas available, canister duration, CO2 level, temperature, battery life), but also displays those parameters in a clear manner as a controlling resource time. In some embodiments, this information may additionally be used by the system to modify the PO2 and/or remaining dive time by generating warnings.

In accordance with embodiment of the present disclosure, one with ordinary skill in the art will understand that data measurements can be taken and calculations can be performed with regard to dive resources, dive resource usage rates, dive resource net effects, dive variables and dive time limitations at a frequency suitable to insure that the method and apparatus of the present disclosure can monitor and indicate rapid changes in any of these quantities.

Additionally, in view of the foregoing disclosure, those skilled in the art will understand that the system may be configured to adjust (e.g., reduce) the control PO2 (setpoint) based on user input of the control parameter or via automatic adjustment of the control parameter (e.g., initiated by the processor according to program control and not directly in response to user input), or both. Those skilled in the art will also understand in view of the foregoing that various such embodiments of the system can be applied to single gas rebreathers as well as to dual gas rebreathers (e.g., separate HP 100% oxygen and HP diluents gas supplies), such as in a gas extender mode to save oxygen.

By way of example for purposes of clarity of exposition, in some embodiments if the system determines that oxygen is running low and may not be enough to complete the planned dive time, then the system can automatically reduce PO2 by effectively varying (decreasing) the control parameter. More specifically, for example, the resources management system may elect to automatically modify the control parameter based on remaining HP gas and any decompression requirement. As a specific illustrative example, if the decompression time were 30 minutes and the HP 02 gas supply were estimated by the resources management system to only last 25 minutes the control parameter could be adjusted automatically to reduce the PO2 and make the gas supply last longer. It will be understood, however, that reducing PO2 will increase the decompression time; as such, the resources management system may be configured to balance the increased decompression time against the new gas supply time available to ensure a safe exit from the dive. As indicated, such an illustrative scenario applies to dual and single gas implementations of designs according to various embodiments of the present disclosure.

It may be appreciated, therefore, that adaptively controlling PO2 (e.g., rather than controlling PO2 according to a fixed setpoint) in accordance with some embodiments of the present disclosure provides for a gas extender mode, wherein HP oxygen usage can be extended. It will also be understood in view of the foregoing, that while gas extender control may be applied to dual gas and single gas systems, it may be more advantageously applied to 100% oxygen in a dual gas system, as less gas injection and venting may occur compared to a single gas (e.g., using a 40% 02 mix). Similarly, gas extender control typically is more advantageous for higher oxygen gas fractions, as generally a higher FO2 of the gas supply allows the system to more efficiently control PO2 to a high level, as with each injection there is less inert gas injected and hence less additional volume to vent.

In accordance with the foregoing, those skilled in the art will understand that adaptively controlling PO2 and managing dive resources according to various embodiments of the present disclosure comprises source gas injection into the rebreather loop as well as venting of the rebreather loop in the event that the loop pressure (volume) exceeds a given level. According to some aspects, various embodiments of the present disclosure include a loop control valve that is operable for venting excessive volume while also compensating for the hydrostatic effect associated with the difference between the pressure exerted on the diver's lung centroid and the pressure exerted on the counterlung.

More specifically, as understood by those skilled in the art, the volume of gas contained within the rebreather exerts a pressure on the diver's lungs and is typically measured at the mouthpiece and, in some instances, is designed to be maintained within, for example, +/- 25mb for the various diver orientations. If a diver has a fixed volume within the rebreather, due to various factors including the orientation, size, and shape of the counterlungs and their ability to move freely within the rebreather design, this volume will exert a changing pressure at the mouthpiece of the diver based on the diver's orientation due to the pressure difference (measured difference) between the counterlung and the diver's lung centroid. This orientation dependent pressure difference is known as the hydrostatic effect.

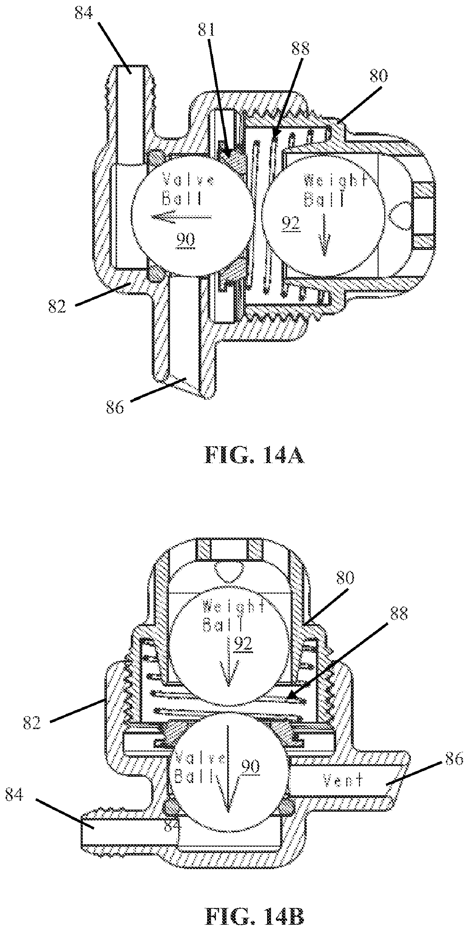

FIGS. 14A-C schematically depict an illustrative loop control valve (LCV) that provides for venting loop overpressure while compensating for the hydrostatic effect, in accordance with some embodiments. In accordance with some embodiments, the LCV is configured to regularly vent the excess volume of gas that may arise in accordance with adaptively controlling PO2 based on a control parameter as discussed above. It will be understood, however, that an LCV as disclosed herein may be implemented in various rebreathers, regardless of the particular PO2 control method.

Whereas a conventional rebreather typically employs a single overpressure valve, according to various embodiments employing an LCV such as that depicted in FIGS. 14A-C, the overpressure function is provided by two valves: e.g., the LCV valve of FIGS. 14A-C and a separate overpressure valve (not shown). This latter overpressure valve may comprise, for example, a valve seat and a spring set to approximately 40mb (4.0 kPa), such that this overpressure valve acts as a high flow safety valve. The latter overpressure valve may be positioned, along with the LCV, as mechanically close as possible to the diver's lung centroid (e.g., mounted centrally on the diver's back).

As shown in FIGS. 14A-C, LCV comprises a cap portion 80 threadably coupled to main housing 82, which includes a port 84 coupled to the rebreather loop (i.e., at loop pressure) and a vent port 86. The LCV also comprises a valve ball 90, spring 88, and weight ball 92. Balls 90 and 92 may be implemented as rubberized steel balls. The valve seat in the LCV is formed by weighted ball 90 touching the valve walls and the ball is held in place by spring 88. The LCV gets a gas feed from the exhale counterlung via a one-way valve. The LCV and one-way valve combined provide for a regular water removal system from the exhale counterlung; as the LCV vents, water is expelled.

The valve ball 90 and weight ball 92, together with the spring 88, are configured to compensate for the hydrostatic effect: depending on the orientation of the diver, and hence the orientation of the LCV, the balls and spring will result in a different loop pressure threshold being required for the LCV to vent the loop volume. The force of the spring and the weight of the balls are chosen to equate to a certain force/pressure in a given orientation. For a given configuration of ball weights and a given spring, the vent pressure is adjustable via the ramped and castelated adjustment ring 81 (FIG. 14A), which provides for adjusting the spring force by varying the compression on the spring.

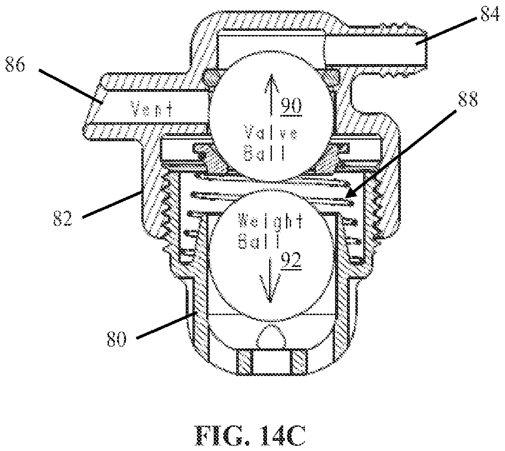

More specifically, for example, (a) FIG. 14A schematically depicts the LCV oriented according to the diver being oriented upright such that the loop pressure is set by the spring only, as the force of the weight ball 92 is orthogonal to the spring force that acts on the valve ball 90 in a direction perpendicular to the surface normal direction; (b) FIG. 14B schematically depicts the LCV oriented according to the diver being oriented face down such that the loop pressure is set by the spring force plus the weight of both balls 90 and 92; and (c) FIG. 14C schematically depicts the LCV oriented according to the diver being oriented face up such that the loop pressure is set by the difference between the spring force and the weight of the valve ball 90, as the weight ball 92 does not contribute and has no effect as it falls away from the valve.

By way of example, in accordance with an illustrative implementation, the vent pressure for the diver upright orientation in FIG. 14A may be about 15 mb (1.5 kPa); the vent pressure for the diver face down orientation of FIG. 14B is about 35 mb (3.5 kPa) (i.e., equal to about 15mb (1.5 kPa) (spring force) plus about 10 mb (1 kPa) corresponding to the weight of ball 90 plus about 10mb (1.0 kPa) corresponding to the weight of ball 92); and the vent pressure for the diver face up orientation of FIG. 14C is about 5 mb (0.5 kPa) (i.e., 5 equal to about 15 mb (1.5 kPa) (spring force) minus about 10 mbar (1 kPa) corresponding to the weight of valve ball 90). It will be understood that various alternative implementations of the LCV may provide for different orientation dependent vent pressure values based on implementing a different spring force (e.g., the force of a given spring may be adjusted by adjusting its compression; also, different springs may be used) and/or by varying the weight of the balls.

It is understood that the above illustrative embodiment is configured assuming the counterlungs are disposed on the diver's back. That is, in a face down position, with counterlungs positioned on the divers back, the diver would find it easy to exhale; hence to keep the valve closed, according to the embodiment, one ball acts on the spring for closing the seat plus the additional ball acts on the first ball to provide additional force keeping the valve closed until approximately 35mb (3.5 kPa) is reached at which point it will vent. When the diver is face up, the reverse is true and the mechanical mass of one ball falls away completely and the remaining ball applies a force to the spring to allow it to release at a lower pressure (5 mb (0.5 kPa) in the specific illustrative example). In the upright position as the balls and spring are horizontal, now virtually the only force acting on the ball to seal the seat is the spring force, keeping the valve closed until about 15 mb (1.5 kPa) is reached. As such, the mechanical configuration of the LCV compensates for the hydrostatic effect.

Further, it is understood that while the illustrative embodiment is configured assuming the counterlungs are disposed on the diver's back, alternative configurations may be implemented to appropriately compensate for the hydrostatic effect for rebreather configurations where the counterlungs are disposed at another position, such as on the diver's chest, over-shoulder, or side-mounted.

In accordance with an alternative implementation of an LCV according to some embodiments, rather than implementing the LCV valve using mechanical components that provide an orientation dependent force on the valve stop, the LCV may be implemented according to an electromechanical control loop. For example, the LCV may be implemented by electronically controlled venting, such as by implementing a solenoid loop vent valve (e.g., a gas solenoid) under control of a processor (e.g., the rebreather computer processor) that is responsive to sensors configured for determining the diver's orientation. In some embodiments, the sensors may be accelerometers (e.g., 4-axis accelerometer) and the processor may (i) determine the diver's orientation based on the accelerometer signals, (ii) determine the vertical displacement of the counterlungs relative to the diver's lung centroid based on the determined diver orientation, (iii) detect the loop pressure (from a pressure sensor), and (iv) control the solenoid valve to vent at a loop pressure threshold that is dependent on the vertical displacement between the counterlungs and the diver's lung centroid. The accelerometers may be integrated into LCV, or may be positioned on one or more other portions of the rebreather and/or the diver.

In more detail, in accordance with the above discussion, while the loop pressure sensor senses pressure in the loop, this pressure is different from the pressure in the divers lungs/mouth because of the water column difference, and this difference changes with angular movement of the diver based on the vertical displacement dependent pressure difference between lung centroid. Accordingly, in some embodiments implementing computer controlled electromechanical venting, an accelerometer can be used such that the computer can define or ascertain the diver's orientation or angular movement and hence can calculate the vertical displacement (e.g., based on trigonometric calculation, such as using the Pythagorean theorem, or an equivalent right-angled triangle calculation using a trigonometric function, or by any appropriate transformation or component determination) and therefore the offset pressure from the loop pressure.

More specifically, in accordance with some embodiments, the computer control system (e.g., comprising a processor) uses the accelerometer to define the diver's orientation in the water and hence calculate a known hydrostatic orientation. To accurately determine the pressure differential between the counterlungs and the diver's lung centroid, the computer control system also has information indicative of the position of the counterlungs with respect to the lung centroid. This information may, for example, be input into the computer as a linear distance, or components relative to a reference frame, or be calculated by the system during a calibration routine that determines the 3D relationship between the accelerometer, lung centroid, and counterlung location. With this calibration information, the computer control system can more accurately compensate for hydrostatic pressure changes experienced by the user between the lung centroid and countelungs as his/her orientation changes. Different configurations for different divers can be stored. Also different configurations for alternative equipment, such as BCD (buoyancy control device) changes, can also be stored and compensated for, and the system may also be calibrated according to individual diver feedback as to how it feels to breath (e.g, easy, OK, difficult) under one or more orientations. As such, in a known position (e.g., face down as an example), the system using the loop pressure sensor, accelerometer and feedback from the diver on how it feels to breath (Easy, OK, Hard) can correct for the centroid position in different divers.

Once the computer can accurately determine the pressure difference between centroid and counterlung(s) in any orientation, then the gas solenoid can be controlled to vent excess pressure from the breathing loop at the appropriate time to compensate for the hydrostatic effect. By way of example, the pressure may normally be set to +15mb (1.5 kPa_ but could be adjustable to suit diver comfort requirements, as noted above. Such compensation may also be implemented in accordance with an appropriate PO2 control method, such as implementations of the adaptive PO2 control methods described hereinabove.

Although the present disclosure has been described in considerable detail with reference to certain embodiments thereof, other embodiments are possible. Therefore, the spirit and scope of the appended claims should not be limited to the description of the embodiments contained therein.

The method, systems and apparatus of the present disclosure are further described in the following paragraphs.

A method for automatically controlling partial pressure of oxygen in a rebreather breathing loop may comprise: storing a minimum value of partial pressure of oxygen; measuring partial pressure of oxygen in the rebreather breathing loop; adding a portion of a gas supply to the rebreather breathing loop if partial pressure of oxygen in the rebreather breathing loop is less than the minimum value of partial pressure of oxygen; storing a value of a first reduction coefficient; measuring ambient pressure; calculating a maximum operating value of partial pressure of oxygen as the product of ambient pressure, concentration of oxygen in the gas supply and the first reduction coefficient; storing a value of a first control parameter; calculating a setpoint for partial pressure of oxygen as the sum of the minimum value of partial pressure of oxygen and the product of the first control parameter and the absolute value of the difference between the maximum operating value and minimum value of partial pressure of oxygen; and adding gas supply to the rebreather breathing loop if partial pressure of oxygen in the rebreather breathing loop is less than the setpoint for partial pressure of oxygen.

The value of the first reduction coefficient may be from 0.75 to 0.95.

The value of the first control parameter may be from 0% to 100%.

The gas supply is oxygen, may further comprise : storing an absolute maximum value of partial pressure of oxygen; and limiting the setpoint for partial pressure of oxygen to the absolute maximum value of partial pressure of oxygen.

The gas supply may be an oxygen-enriched gas mixture, further comprising: selecting a gas supply having a concentration of oxygen for which partial pressure of oxygen in the gas supply will not exceed a selected value at a maximum planned dive depth.

A method for managing the use of dive resources may comprise: storing a target dive time; measuring an elapsed dive time; calculating a target remaining dive time; measuring a dive resource; measuring a dive resource usage rate; calculating a dive resource net effect; measuring a dive variable; calculating a dive time limitation; comparing the target remaining dive time and each dive resource net effect; and identifying a termination time as the lowest value of the target remaining dive time and each dive resource net effect.

The method may further comprise: displaying the lowest dive resource net effect if the target remaining dive time is not the termination time and the dive time limitation is less than the termination time.

The method may further comprise: displaying the absolute value of the difference between the termination time and the lowest dive resource net effect if the target remaining dive time is the termination time and the dive time limitation is less than the termination time.

The method may further comprise: displaying a first warning indicator if the dive time limitation is equal to or greater than the termination time.

The method of may further comprise:adjusting a setpoint for partial pressure of oxygen in a rebreather breathing loop if the dive time limitation is greater than the termination time so that the termination time will be equal to the target remaining dive time.

The dive resource may be pressure of a gas supply, scrubber capacity or battery capacity; the dive resource usage rate may be decrease in pressure of the gas supply over time, number of injections from the gas supply into the rebreather breathing loop over time or electrical current; the dive resource net effect may be gas supply duration, scrubber canister duration or battery duration; the dive variable may be depth, elapsed dive time or partial pressure of oxygen in the rebreather breathing loop; and the dive time limitation may be no decompression limit, decompression time or central nervous system oxygen toxicity percentage.

The dive resource may be pressure of a gas supply, the dive resource usage rate is decrease in pressure of the gas supply over time or number of injections from the gas supply into the rebreather breathing loop over time and the dive resource net effect is gas supply duration, further comprising: calculating the gas supply duration as a function of the pressure of the gas supply and the decrease in pressure of the gas supply over time or the number of injections from the gas supply into the rebreather breathing loop over time.

The method may further comprise: defining a reserve gas supply; displaying a second warning indicator if the termination time corresponds to the gas supply duration, the target remaining dive time is greater than the gas supply duration, the target remaining dive time is less than the sum of the gas supply duration and the reserve gas supply duration, and the dive time limitation is less than the sum of the gas supply duration and the reserve gas supply duration; and displaying a third warning indicator if the termination time corresponds to the gas supply duration, the target remaining dive time is greater than the sum of the gas supply duration and the reserve gas supply duration, and the dive time limitation is less than the sum of the gas supply duration and the reserve gas supply duration.

The dive resource may be scrubber capacity, the dive resource usage rate may be number of injections from the gas supply into the rebreather breathing loop over time, the dive resource net effect may be scrubber canister duration and the dive variable may be concentration of carbon dioxide in the rebreather breathing loop or temperature of the scrubber canister. The method may further comprise calculating the scrubber canister duration as a function of either the number of injections from the gas supply into the rebreather breathing loop over time, the concentration of carbon dioxide in the rebreather breathing loop or the temperature of the scrubber canister.

The dive resource may be battery capacity, the dive resource usage rate may be electrical current and the dive resource net effect may be battery duration.

The method may further comprise: calculating the battery duration as a function of the battery capacity and the electrical current.

The dive variables may be depth and elapsed dive time and the dive time limitation may be no decompression limit or decompression time.

The method may further comprise: calculating no decompression limit or decompression time as a function of depth and elapsed dive time.

The dive variables may be elapsed dive time and partial pressure of oxygen in the rebreather breathing loop and the dive time limitation may be central nervous system oxygen toxicity percentage.

The method may further comprise: calculating central nervous system oxygen toxicity percentage as a function of elapsed dive time and partial pressure of oxygen in the rebreather breathing loop.

An automatic control system for a rebreather breathing loop may comprise: a gas supply; a gas supply pressure regulator; a scrubber canister; a counterlung; a first sensor adapted to measure ambient pressure; a second sensor adapted to measure partial pressure of oxygen; a first valve adapted to add the gas supply to the rebreather breathing loop; a power source; connecting hoses; check valves adapted to control the direction of flow of gas in the rebreather breathing loop; and a processor adapted to receive data for partial pressure of oxygen in the rebreather breathing loop, ambient pressure, a selected minimum value of partial pressure of oxygen, a selected concentration of oxygen in the gas supply, a selected value of a first reduction coefficient and a selected value of a first control parameter, calculate a maximum operating value of partial pressure of oxygen as a function of ambient pressure, the selected concentration of oxygen in the gas supply and the selected value of the first reduction coefficient, calculate a setpoint for partial pressure of oxygen as a function of the selected value of the first control parameter, the selected value of a first control parameter and the selected minimum value of partial pressure of oxygen, compare data for partial pressure of oxygen in the rebreather breathing loop with the setpoint for partial pressure of oxygen, and send a signal to add a portion of the gas supply to the rebreather breathing loop if the partial pressure of oxygen in the rebreather breathing loop is less than the setpoint for partial pressure of oxygen. A dive resource management system for a rebreather breathing loop may comprise: a gas supply; a gas supply pressure regulator; a scrubber canister; a counterlung; a first sensor adapted to measure ambient pressure; a pressure transducer adapted to indicate depth as a function of ambient pressure; a second sensor adapted to measure partial pressure of oxygen; a first valve adapted to add the gas supply to the rebreather breathing loop; a power source; a clock; connecting hoses; check valves adapted to control the direction of flow of gas in the rebreather breathing loop; and a processor adapted to receive data for target dive time, elapsed dive time, pressure of a gas supply, battery capacity, decrease in pressure of the gas supply over time, electrical current, depth and or partial pressure of oxygen in the rebreather breathing loop calculate target remaining dive time, gas supply duration, battery duration, no decompression limit, decompression time, and central nervous system oxygen toxicity percentage and remaining dive time corresponding to gas supply duration, battery duration, no decompression limit, decompression time and central nervous system oxygen toxicity percentage, and identify a dive termination time.

The processor may be further adapted to send a signal to display the dive termination time or a signal to display a warning indicator if the dive termination time is not equal to the target remaining dive time, further comprising: a graphical display.

The processor may be further adapted to receive data for scrubber capacity, concentration of carbon dioxide in the rebreather breathing loop, number of injections from the gas supply into the rebreather breathing loop over time and temperature of the scrubber canister and calculate scrubber canister duration and remaining dive time corresponding to scrubber canister duration, further comprising: a third sensor adapted to measure concentration of carbon dioxide; a fourth sensor adapted to measure temperature of the scrubber canister.

The processor may be further adapted to send a signal to adjust a setpoint for partial pressure of oxygen in the rebreather breathing loop if the required dive time is greater than the termination time so that the termination time will be equal to the target remaining dive time.

An apparatus comprising: a loop control valve that includes (i) a loop port configured for coupling to receive a gas feed via a one-way valve from an exhale counterlung of a rebreather loop, and (ii) a vent port configured to selectively vent a volume of gas from the rebreather loop; and a subsystem configured to vary a loop pressure at which the loop control valve is operable to selectively vent the volume of gas from the rebreather loop.

The loop control valve may comprise a valve stop that selectively gates the flow of the gas from the rebreather loop to the vent port, and wherein the subsystem comprises at least one mechanical component configured to vary a force applied to the valve stop according to the orientation of the loop control valve.

The at least one mechanical component may be configured to vary the force applied to the valve stop based on variation in the component of the weight of at least a portion of the at least one mechanical component that acts on the valve stop.

The subsystem may comprise a processor that is configured to detect an accelerometer signal and to selectively gate the loop control valve to vent the volume of gas from the rebreather loop based on at least the accelerometer signal.

**Claims**

1. A method for managing the use of dive resources **characterised by**:

    storing a target dive time;
    measuring an elapsed dive time;
    calculating a target remaining dive time;
    measuring a dive resource;
    measuring a dive resource usage rate;
    calculating a dive resource net effect;
    measuring a dive variable;
    calculating a dive time limitation;
    comparing the target remaining dive time and each dive resource net effect; and
    determining a dive termination time as the lowest value of the target remaining dive time and each dive resource net effect.

2. The method of claim 1 further comprising: displaying the lowest dive resource net effect if the target remaining dive time is not the termination time and the dive time limitation is less than the termination time.

3. The method of claim 1 further comprising: displaying the absolute value of the difference between the termination time and the lowest dive resource net effect if the target remaining dive time is the termination time and the dive time limitation is less than the termination time.

4. The method of claim 1 further comprising: displaying a first warning indicator if the dive time limitation is equal to or greater than the termination time.

5. The method of claim 1 further comprising: adjusting a setpoint for partial pressure of oxygen in a rebreather breathing loop if the dive time limitation is greater than the termination time so that the termination time will be equal to the target remaining dive time.

6. The method of claim 1 wherein :

   the dive resource is pressure of a gas supply, scrubber capacity or battery capacity;
   the dive resource usage rate is decrease in pressure of the gas supply over time, number of injections from the gas supply into the rebreather breathing loop over time or electrical current;
   the dive resource net effect is gas supply duration, scrubber canister duration or battery duration;
   the dive variable is depth, elapsed dive time or partial pressure of oxygen in the rebreather breathing loop; and
   the dive time limitation is no decompression limit, decompression time or central nervous system oxygen toxicity percentage.

7. A dive resource management system for a rebreather breathing loop comprising:

   a gas supply;
   a gas supply pressure regulator;
   a scrubber canister;
   a counterlung;
   a first sensor adapted to measure ambient pressure;
   a pressure transducer adapted to indicate depth as a function of ambient pressure;
   a second sensor adapted to measure partial pressure of oxygen;
   a first valve adapted to add the gas supply to the rebreather breathing loop;
   a power source;
   a clock;
   connecting hoses;
   check valves adapted to control the direction of flow of gas in the rebreather breathing loop; and
   **characterised in that** the system further comprises a processor adapted to :

      receive data for target dive time, elapsed dive time, pressure of a gas supply, battery capacity, decrease in pressure of the gas supply over time, electrical current, depth and or partial pressure of oxygen in the rebreather breathing loop,
      calculate target remaining dive time, gas supply duration, battery duration, no decompression limit, decompression time, and central nervous system oxygen toxicity percentage and remaining dive times for each dive variable of gas supply duration, battery duration, no decompression limit, decompression time and central nervous system oxygen toxicity percentage, and
      determine a dive termination time corresponding to the lowest value of the target remaining dive time and the remaining dive times calculated for each dive variable,

   wherein the processor is further adapted to send a signal to adjust a setpoint for partial pressure of oxygen in the rebreather breathing loop if the required dive time is greater than the termination time so that the termination time will be equal to the target remaining dive time.

8. The dive resource management system of claim 7 wherein the processor is further adapted to send a signal to a graphical display to display the dive termination time.

9. The dive resource management system of claim 7 further comprising: a third sensor adapted to measure concentration of carbon dioxide; a fourth sensor adapted to measure temperature of the scrubber canister.

10. The dive resource management system of claim 7, wherein the processor sends a signal to the graphical display to display a warning indicator when the dive termination time is equal to or less than the target remaining dive time.

11. The dive resource management system of claim 10, wherein the processor calculates a scrubber canister duration and a remaining dive time corresponding to the scrubber canister duration from signals received from the third and fourth sensors, number of injections from the gas supply via the first valve into the rebreather loop and temperature of the scrubber canister.

12. The dive resource management system of claim 11, wherein the dive termination time corresponds to the lowest value of the target remaining dive time, the remaining dive times of the calculated five variables and the remaining dive time corresponding to the scrubber canister duration.

13. The dive resource management system of claim 7, wherein the setpoint is adjusted to a partial pressure of oxygen level that can be maintained within limits established by safety considerations and depth, and a control parameter may be varied to suit a dive plan and yield a setpoint that balances decompression time and gas usage.

14. The dive resource management system of claim 13, wherein the control parameter is diver selectable and is a value expressed as a percentage of a range between minimum and maximum safe partial pressures of oxygen.


**Patentansprüche**

1. Verfahren zum Verwalten der Verwendung von Tauchgangressourcen, **gekennzeichnet durch**:

   Speichern einer Zieltauchgangzeit;
   Messen einer verstrichenen Tauchgangzeit;
   Berechnen einer Zielresttauchgangzeit;
   Messen einer Tauchgangressource;
   Messen einer Tauchgangressourcenverbrauchsrate;
   Berechnen eines Tauchgangressourcennettoergebnisses;
   Messen einer Tauchgangvariable;
   Berechnen einer Tauchgangzeitbegrenzung;
   Vergleichen der Zielresttauchgangzeit und jedes Tauchgangressourcennettoergebnisses; und
   Bestimmen einer Tauchgangbeendungszeit als den niedrigsten Wert der Zielresttauchgangzeit und jedes Tauchgangressourcennettoergebnisses.

2. Verfahren nach Anspruch 1, das ferner Folgendes umfasst: Anzeigen des niedrigsten Tauchgangressourcennettoergebnisses, falls die Zielresttauchgangzeit nicht die Beendungszeit ist und die Tauchzeitbegrenzung geringer als die Beendungszeit ist.

3. Verfahren nach Anspruch 1, das ferner Folgendes umfasst: Anzeigen des absoluten Wertes der Differenz zwischen der Beendungszeit und dem niedrigsten Tauchgangressourcennettoergebnis, falls die Zielresttauchgangzeit die Beendungszeit ist und die Tauchgangzeitbegrenzung geringer als die Beendungszeit ist.

4. Verfahren nach Anspruch 1, das ferner Folgendes umfasst: Anzeigen eines ersten Warnhinweises, falls die Tauchzeitbegrenzung gleich der oder größer als die Beendungszeit ist.

5. Verfahren nach Anspruch 1, die Folgendes umfasst: Anpassen eines Sollwertes für einen Sauerstoffpartialdruck in einem Rebreather-Atemkreislauf, falls die Tauchgangzeitbegrenzung größer als die Beendungszeit ist, so dass die Beendungszeit gleich der Zielresttauchgangzeit sein wird.

6. Verfahren nach Anspruch 1, wobei:

   die Tauchressource ein Druck einer Gasversorgung, eine Scrubber-Kapazität (Atemkalkkapazität) oder eine Batteriekapazität ist;
   die Tauchgangressourcenverbrauchsrate eine Abnahme des Drucks der Gasversorgung mit der Zeit, die Anzahl an Injektionen von der Gasversorgung in den Rebreather-Atemkreislauf mit der Zeit oder ein elektrischer Strom ist;

das Tauchgangressourcennettoergebnis eine Gasversorgungsdauer, eine Scrubber-Kanister-Dauer oder eine Batteriedauer ist;

die Tauchgangvariable eine Tiefe, eine verstrichene Tauchgangzeit oder ein Sauerstoffpartialdruck in dem Rebreather-Atemkreislauf ist; und

die Tauchgangzeitbegrenzung ein Keine-Dekompressionsbeschränkung-Zustand, eine Dekompressionszeit oder ein Prozentsatz der Sauerstofftoxikose des zentralen Nervensystems ist.

7. Tauchgangressourcenverwaltungssystem für einen Rebreather-Atemkreislauf, der Folgendes umfasst:

eine Gasversorgung;
einen Gasversorgungsdruckregler;
einen Scrubber-Kanister;
eine Gegenlunge;
einen ersten Sensor, der zum Messen des Umgebungsdrucks ausgelegt ist;
einen Druckwandler, der zum Anzeigen einer Tiefe als Funktion des Umgebungsdrucks ausgelegt ist;
einen zweiten Sensor, der zum Messen eines Sauerstoffpartialdrucks ausgelegt ist;
ein erstes Ventil, das zum Hinzufügen der Gasversorgung zu dem Rebreather-Atemkreislauf ausgelegt ist;
eine Leistungsquelle;
eine Uhr;
Verbindungsschläuche;
Rückschlagventile, die zum Steuern der Richtung des Gasflusses in dem Rebreather-Atemkreislauf ausgelegt sind; und

**dadurch gekennzeichnet, dass** das System ferner einen Prozessor umfasst, der zu Folgendem ausgelegt ist:

Empfangen von Daten für eine Zieltauchgangzeit, eine verstrichene Tauchgangzeit, einen Druck einer Gasversorgung, eine Batteriekapazität, eine Verringerung des Drucks der Gasversorgung mit der Zeit, einen elektrischen Strom, eine Tiefe und/oder einen Sauerstoffpartialdruck in dem Rebreather-Atemkreislauf, Berechnen einer Zielresttauchgangzeit, einer Gasversorgungsdauer, einer Batteriedauer, eines Keine-Dekompressionsbeschränkung-Zustands, einer Dekompressionszeit und eines Prozentsatzes einer Sauerstofftoxikose des zentralen Nervensystems und der Resttauchgangzeiten für jede Tauchgangvariable der Gasversorgungsdauer, der Batteriedauer, des Keine-Dekompressionsbeschränkung-Zustands, der Dekompressionszeit und des Prozentsatzes der Toxikose des zentralen Nervensystems, und

Bestimmen einer Tauchgangbeendungszeit, die dem niedrigsten Wert der Zielresttauchgangzeit und der für jede Tauchgangvariable berechneten Resttauchganzzeiten entspricht,
wobei der Prozessor ferner zum Senden eines Signals zum Anpassen eines Sollwertes für den Sauerstoffpartialdruck in dem Rebreather-Atemkreislauf, falls die benötigte Tauchgangzeit größer als die Beendungszeit ist, so dass die Beendungszeit gleich der Zielresttauchgangzeit sein wird, ausgelegt ist.

8. Tauchgangressourcenverwaltungssystem nach Anspruch 7, wobei der Prozessor ferner zum Senden eines Signals an eine graphische Anzeige, um die Tauchgangbeendungszeit anzuzeigen, ausgelegt ist.

9. Tauchgangressourcenverwaltungssystem nach Anspruch 7, das ferner Folgendes umfasst: einen dritten Sensor, der zum Messen einer Kohlenstoffdioxidkonzentration ausgelegt ist; einen vierten Sensor, der zum Messen einer Temperatur des Scrubber-Kanisters ausgelegt ist.

10. Tauchgangressourcenverwaltungssystem nach Anspruch 7, wobei der Prozessor ein Signal an die graphische Anzeige sendet, um einen Warnhinweis anzuzeigen, wenn die Tauchgangbeendungszeit gleich der oder geringer als die Zielresttauchgangzeit ist.

11. Tauchgangressourcenverwaltungssystem nach Anspruch 10, wobei der Prozessor eine Scrubber-Kanister-Dauer und eine Resttauchgangzeit, die der Scrubber-Kanister-Dauer entspricht, aus den Signalen, die von dem dritten und vierten Sensor empfangen werden, der Anzahl an Injektionen von der Gasversorgung über das erste Ventil in den Rebreather-Kreislauf und der Temperatur des Scrubber-Kanisters berechnet.

12. Tauchgangressourcenverwaltungssystem nach Anspruch 11, wobei die Tauchgangbeendungszeit dem niedrigsten Wert der Zielresttauchgangzeit, den Resttauchgangzeiten der berechneten fünf Variablen und der Resttauchgangzeit, die der Scrubber-Kanister-Dauer entspricht, entspricht.

13. Tauchgangressourcenverwaltungssystem nach Anspruch 7, wobei der Sollwert auf ein Sauerstoffpartialdruckniveau eingestellt wird, der innerhalb der Grenzen aufrechterhalten werden kann, die durch Sicherheitsüberlegungen und die Tiefe eingerichtet werden, und wobei ein Steuerparameter variiert werden kann, so dass er mit einem Tauchgangplan zusammenpasst und ein Sollwert erhalten wird, der die Dekompressionszeit und den Gasverbrauch ausbalanciert.

14. Tauchgangressourcenverwaltungssystem nach Anspruch 13, wobei der Steuerparameter von einem Taucher ausgewählt werden kann und ein Wert ist, der als ein Prozentsatz eines Bereichs zwischen einem minimalen und maximalen sicheren Sauerstoffpartialdruck ausgedrückt wird.

**Revendications**

1. Procédé pour gérer l'utilisation de ressources de plongée **caractérisé en ce qu'**il consiste :

   à stocker un temps de plongée cible ;
   à mesurer un temps de plongée écoulé ;
   à calculer un temps de plongée restant cible ;
   à mesurer une ressource de plongée ;
   à mesurer un taux d'utilisation de ressources de plongée ;
   à calculer un effet net de ressources de plongée ;
   à mesurer une variable de plongée ;
   à calculer une limite de temps de plongée ;
   à comparer le temps de plongée restant cible et
   chaque effet net de ressources de plongée ; et
   à déterminer un temps de fin de plongée comme étant la valeur la plus basse du temps de plongée restant cible et de chaque effet net de ressources de plongée.

2. Procédé selon la revendication 1, consistant en outre : à afficher l'effet net de ressources de plongée le plus faible si le temps de plongée restant cible n'est pas le temps de fin et si la limite de temps de plongée est inférieure au temps de fin.

3. Procédé selon la revendication 1, consistant en outre . à afficher la valeur absolue de la différence entre le temps de fin et l'effet net de ressources de plongée le plus faible si le temps de plongée restant cible est le temps de fin et si la limite de temps de plongée est inférieure au temps de fin.

4. Procédé selon la revendication 1, consistant en outre : à afficher un premier indicateur d'avertissement si la limite de temps de plongée est égale ou supérieure au temps de fin.

5. Procédé selon la revendication 1, consistant en outre : à ajuster un point de consigne pour une pression partielle d'oxygène dans une boucle de respiration d'appareil de respiration à circuit fermé si la limite de temps de plongée est supérieure au temps de fin de telle sorte que le temps de fin sera égal au temps de plongée restant cible.

6. Procédé selon la revendication 1, dans lequel :

   la ressource de plongée est une pression d'une alimentation en gaz, une capacité de système de régénération ou une capacité de batterie ;
   le taux d'utilisation de ressources de plongée est une baisse de la pression de l'alimentation en gaz au fil du temps, le nombre d'injections depuis l'alimentation en gaz dans la boucle de respiration d'appareil de respiration à circuit fermé au fil du temps ou un courant électrique ;
   l'effet net de ressources de plongée est une durée d'alimentation en gaz, une durée de cartouche de système de régénération ou une durée de batterie ;
   la variable de plongée est la profondeur, le temps de plongée écoulé, ou la pression partielle d'oxygène dans la boucle de respiration d'appareil de respiration à circuit fermé ; et
   la limite de temps de plongée est une limite sans décompression, un temps de décompression ou un taux de toxicité de l'oxygène dans le système nerveux central.

7.  Système de gestion de ressources de plongée pour une boucle de respiration d'appareil de respiration à circuit fermé comprenant :

     une alimentation en gaz ;
     un régulateur de pression d'alimentation en gaz ;
     une cartouche de système de régénération ;
     un faux-poumon ;
     un premier capteur conçu pour mesurer la pression ambiante ;
     un transducteur de pression conçu pour indiquer la profondeur en fonction de la pression ambiante ;
     un deuxième capteur conçu pour mesurer la pression partielle d'oxygène ;
     une première soupape conçue pour ajouter l'alimentation en gaz à la boucle de respiration d'appareil de respiration à circuit fermé ;
     une source d'énergie ;
     une horloge ;
     des tuyaux de raccordement ;
     des clapets de non-retour conçus pour réguler la direction d'écoulement d'un gaz dans la boucle de respiration d'appareil de respiration à circuit fermé ; et
     **caractérisé en ce que** le système comprend en outre un processeur conçu :

          pour recevoir des données pour un temps de plongée cible, un temps de plongée écoulé, une pression d'une alimentation en gaz, une capacité de batterie, une baisse de la pression de l'alimentation en gaz au fil du temps, un courant électrique, la profondeur et/ou la pression partielle d'oxygène dans la boucle de respiration d'appareil de respiration à circuit fermé,
          pour calculer un temps de plongée restant cible, une durée d'alimentation en gaz, une durée de batterie, une limite sans décompression, un temps de décompression et un taux de toxicité de l'oxygène dans le système nerveux central et des temps de plongée restants pour chaque variable de plongée d'une durée d'alimentation en gaz, d'une durée de batterie, d'une limite sans décompression, d'un temps de décompression et d'un taux de toxicité de l'oxygène dans le système nerveux central, et
          pour déterminer un temps de fin de plongée correspondant à la valeur la plus basse du temps de plongée restant cible et des temps de plongée restants calculés pour chaque variable de plongée, dans lequel le processeur est en outre conçu pour envoyer un signal pour ajuster un point de consigne pour une pression partielle d'oxygène dans la boucle de respiration d'appareil de respiration à circuit fermé si le temps de plongée nécessaire est supérieur au temps de fin de telle sorte que le temps de fin sera égal au temps de plongée restant cible.

8.  Système de gestion de ressources de plongée selon la revendication 7, dans lequel le processeur est en outre conçu pour envoyer un signal à un dispositif d'affichage graphique pour afficher le temps de fin de plongée.

9.  Système de gestion de ressources de plongée selon la revendication 7, comprenant en outre : un troisième capteur conçu pour mesurer la concentration en dioxyde de carbone ; un quatrième capteur conçu pour mesurer la température de la cartouche du système de régénération.

10. Système de gestion de ressources de plongée selon la revendication 7, dans lequel le processeur envoie un signal au dispositif d'affichage graphique pour afficher un indicateur d'avertissement lorsque le temps de fin de plongée est égal ou inférieur au temps de plongée restant cible.

11. Système de gestion de ressources de plongée selon la revendication 10, dans lequel le processeur calcule une durée de cartouche de système de régénération et un temps de plongée restant correspondant à la durée de la cartouche du système de régénération à partir de signaux reçus des troisième et quatrième capteurs, du nombre d'injections depuis l'alimentation en gaz par le biais de la première soupape dans la boucle d'appareil de respiration à circuit fermé et de la température de la cartouche de système de régénération.

12. Système de gestion de ressources de plongée selon la revendication 11, dans lequel le temps de fin de plongée correspond à la valeur la plus basse du temps de plongée restant cible, des temps de plongée restants des cinq variables de plongée calculées et du temps de plongée restant correspondant à la durée de la cartouche du système de régénération.

13. Système de gestion de ressources de plongée selon la revendication 7, dans lequel le point de consigne est ajusté à une pression partielle du niveau d'oxygène qui peut être maintenu dans des limites établies par des considérations de sécurité et par la profondeur et un paramètre de commande peut être modifié de sorte à convenir à un plan de plongée et produire un point de consigne qui équilibre un temps de décompression et un usage de gaz.

14. Système de gestion de ressources de plongée selon la revendication 13, dans lequel le paramètre de commande est un paramètre qui peut être sélectionné par un plongeur, et est une valeur exprimée comme étant un pourcentage d'une plage entre des pressions partielles d'oxygène minimale et maximale de sécurité.

# FIGURE 1

Select $FO_2$ for gas supply based on planned maximum dive depth and maximum safe partial pressure of oxygen

↓

Select value for minimum partial pressure of oxygen

↓

Measure partial pressure of oxygen

↓

Partial pressure of oxygen ≥ minimum selected value? —No→ Add gas supply

Yes

↓

Select value of reduction coefficient

↓

Measure ambient pressure

↓

Calculate maximum operating partial pressure of oxygen

↓

Select value of control parameter

↓

Calculate setpoint for partial pressure of oxygen

↓

Measure partial pressure of oxygen

↓

Actual partial pressure of oxygen < setpoint? —Yes→ Add gas supply

No

# FIGURE 2

# FIGURE 3

# FIGURE 4

# FIGURE 5

# FIGURE 6

# FIGURE 7

Select target dive time

↓

Measure elapsed dive time

↓

Calculate target remaining dive time

↓

Measure dive resources

↓

Measure diver resource usage rates

↓

Calculate dive resource net effects

↓

Measure dive variables

↓

Calculate dive time limitations

↓

Compare target remaining dive time with dive resource net effects

↓

Identify termination time as shortest of dive resource net effects

↓

Display warning indicators as needed

# FIGURE 8

# FIGURE 9

# FIGURE 10

# FIGURE 11

```
MCM STATUS

HP      CO2     BAT
 78min   86min   340min
NST     CNS     DMINS
 67min   89min    67min
```

# FIGURE 12

```
MCM STATUS

HP      CO2     BAT
 78min   56min   340min
NST     CNS     DMINS
 67min   89min    56min
```

# FIGURE 13

```
MCM STATUS

HP      CO2     BAT
 48min   86min   340min
NST     CNS     DMINS
 67min   89min    48min
```

**FIG. 14A**

**FIG. 14B**

FIG. 14C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5503145 A
- US 6302106 B